# FASCICULE DE BREVET EUROPEEN

(11) **EP 3 095 325 B1**
(45) Date de publication et mention de la délivrance du brevet: **26.12.2018**
(21) Numéro de dépôt: 16170713.8
(22) Date de dépôt: 20.05.2016
(51) Int. Cl.: A01K 81/04, F42B 6/08

(54) **FLÈCHE POUR ARME DE PÊCHE SOUS-MARINE, ET POINTE DE PÉNÉTRATION POUR CECI**
PFEIL FÜR UNTERWASSERWAFFE FÜR DIE SPORTFISCHEREI, UND SPITZE DAFÜR
BOOM FOR UNDERWATER FISHING WEAPON, AND PENETRATING TIP THEREFOR

(30) Priorité: 22.05.2015 FR 1554633
(43) Date de publication de la demande: 23.11.2016
(73) Titulaire: Beuchat International, 13015 Marseille (FR)
(72) Inventeur: BUREL, Philippe, 13008 Marseille (FR)
(74) Mandataire: Roman, Alexis

(56) Documents cités:
- DE-A1- 4 142 116
- RU-C2- 2 530 597
- US-A- 3 277 893
- US-A- 4 043 067
- US-A- 4 565 377
- US-A- 4 742 637
- US-A1- 2010 173 734
- US-A1- 2011 101 154

## Description

### Domaine technique de l'invention.

L'invention a pour objet une flèche pour arme de pêche sous-marine. Elle a également pour objet une pointe de pénétration adaptée pour équiper une flèche d'arme de pêche sous-marine.

Elle concerne le domaine technique des projectiles spécialement adaptés au tir par arbalète et/ou fusil et/ou pistolet et/ou fouëne pour la pêche sous-marine.

### État de la technique.

Les flèches pour arme de pêche sous-marine, sont généralement formées par une tige longitudinale rectiligne à l'extrémité avant de laquelle est installée une pointe de pénétration profilée.

Le profil de cette pointe peut varier. Ainsi, les documents brevets DE 41 42 116 A1, US 4 043 067 A, US4742637 (MUSACCHIA) et US2009100738 (SULLIVAN) divulguent des pointes multifaces. Ce type de pointe comporte par exemple trois facettes identiques biseautées à 120°. Les documents brevets US2012028741 (PALOMAKI), US3164385 (SHURE) et EP2023073 (OMERSUB) montrent une pointe en ogive. Et les documents brevets US3168313 (LINT) ou WO9639607 (KOZLOVTZEV) illustrent des pointes coniques.

La particularité de toutes ces pointes est que leur profil est usiné de façon symétrique par rapport à l'axe géométrique de la tige sur laquelle elles sont montées.

Lorsque la flèche est propulsée dans l'eau, la pointe subit une force hydrodynamique. A cause du profil symétrique des pointes précitées, les composantes de la force hydrodynamique qui s'exercent perpendiculairement à la direction du mouvement (portance) s'annulent. La flèche a donc tendance à « piquer du nez » et avoir une trajectoire plongeante parabolique, du fait de son poids et de la perte de vitesse qui l'entrainent vers le bas. La précision du tir s'en trouve affectée, d'autant plus que la cible est éloignée. Le tireur doit donc ajusté son tir pour atteindre sa cible.

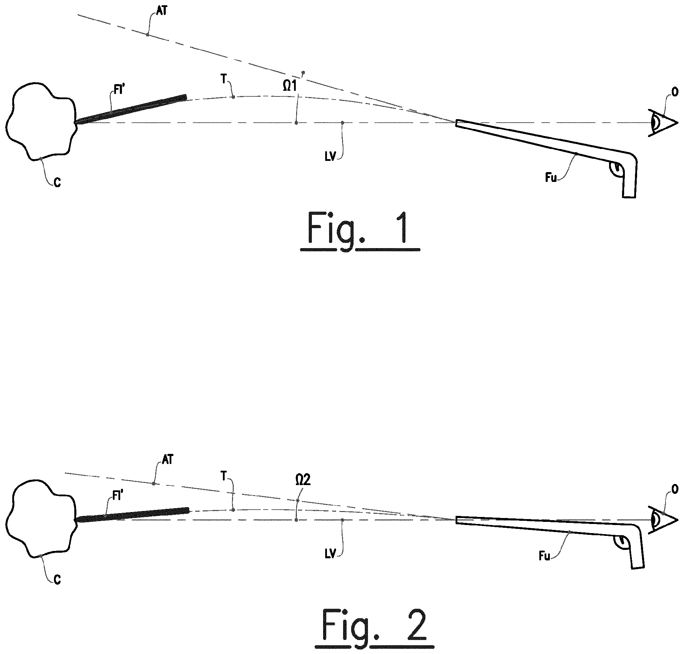

La figure 1 illustre schématiquement cet ajustement. La cible porte la référence C. La ligne de visée, référencée LV, correspond à ligne droite qui va de l'oeil O du tireur à la cible C. L'axe de tir AT correspond à l'axe de l'arbalète ou du fusil de chasse sous-marine Fu. Pour atteindre la cible C, le tireur a naturellement tendance à faire coïncider l'axe de tir AT avec la ligne de visée LV. Cependant, la trajectoire T de la flèche Fl' n'est pas rectiligne, mais parabolique. Pour que la flèche Fl' atteigne la cible C, le tireur doit donc décaler angulairement, vers le haut, l'axe de tir AT de la ligne de visée LV. Ce décalage angulaire Ω1 dépend non seulement de la vitesse de propulsion de la flèche Fl', mais également de son poids et de la distance à laquelle est située la cible C, cette distance pouvant variée rapidement lorsqu'il s'agit d'un poisson. Aussi, ces paramètres sont difficilement maitrisables. Et sauf pour des tireurs très expérimentés, le juste décalage angulaire Ω1 est généralement mal apprécié par le tireur, ce qui engendre des erreurs de visée capables de dégrader plus ou moins la qualité du tir.

L'invention vise à remédier à cet état des choses. En particulier, un objectif de l'invention est de proposer une flèche qui améliore la précision du tir.

Un autre objectif de l'invention est de proposer une flèche qui permette, même à des tireurs peu expérimentés, de mieux maîtriser son tir.

Encore un autre objectif de l'invention est d'obtenir une flèche dont la pointe assure une meilleure pénétration dans une cible.

### Divulgation de l'invention.

La solution proposée par l'invention définie par la revendication 1 est une flèche pour arbalète et/ou fusil de chasse sous-marine, comportant une tige longitudinale rectiligne présentant un axe géométrique et à l'extrémité avant de laquelle est installée au moins une pointe de pénétration qui se termine par une extrémité pointue, le profil de la pointe est formé par une paroi extérieure en pente qui converge vers l'extrémité pointue, laquelle paroi extérieure est constituée d'une face supérieure présentant une pente, laquelle face supérieure est située au dessus de l'extrémité pointue et d'une face inférieure située en dessous de ladite extrémité pointue, ladite face inférieure présentant un pan incliné qui s'étend selon le plan sagittal de la flèche et qui converge vers l'extrémité pointue.

Cette flèche est remarquable en ce que, dans le plan sagittal de ladite flèche, la pointe a un profil dissymétrique tel que le pan incliné présente une pente qui est davantage allongée vers l'extrémité arrière de la flèche que la pente de la face supérieure.

Grâce à cette géométrie particulière, la pointe subit maintenant une portance dirigée vers le haut lorsque la flèche est propulsée. Le fait que le pan incliné (assimilable à un intrados d'un point de vue hydrodynamique) ait une pente qui soit plus allongée que celle de la face supérieure (assimilable à un extrados d'un point de vue hydrodynamique) créée une dissymétrie telle que la surface portante induit une portance positive dirigée vers le haut lorsque la flèche est propulsée dans l'eau. Plus particulièrement, la longueur et la surface de l'intrados sont supérieures à la longueur et à la surface de l'extrados de sorte que la portance induite par l'intrados est supérieure à celle induite par l'extrados. Il en résulte que la portance globale induite par la surface portante est dirigée vers le haut.

Comme cela est expliqué plus avant dans la description, cette portance « positive » a pour effet de modifier la trajectoire de la flèche. Le tir est plus tendu, de sorte que le tireur peut pratiquement faire coïncider l'axe de tir AT avec la ligne de visée LV, et donc placer son fusil dans une position plus naturelle. Le tir est de fait mieux maitrisé par le tireur. Egalement, la demanderesse a pu constater qu'à distance de tir équivalente, la précision du tir est globalement améliorée avec une flèche conforme à l'invention. En outre, la géométrie particulière de la pointe accentue son effet pénétrant, à la manière d'une aiguille de seringue.

D'autres caractéristiques avantageuses de l'invention sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- La face inférieure de la paroi extérieure de la pointe, est avantageusement formée par un pan incliné qui s'étend selon l'axe géométrique de la tige, parallèlement au plan sagittal de ladite flèche et qui converge vers l'extrémité pointue.
- La face supérieure de la paroi extérieure de la pointe peut être formée par des facettes biseautées à bords jointifs qui s'étendent selon l'axe géométrique de la tige et qui convergent vers l'extrémité pointue. La longueur du pan incliné étant supérieure à la longueur des facettes biseautées.
- Plus particulièrement, la face supérieure de la paroi extérieure de la pointe, est préférentiellement formée par deux facettes biseautées, ces deux facettes et le pan incliné étant disposés à 120° autour de l'axe géométrique de la tige.
- Dans une variante de réalisation, la face supérieure de la paroi extérieure de la pointe, est formée par une surface conique qui s'étend selon l'axe géométrique de la tige et qui converge vers l'extrémité pointue. La longueur du pan incliné étant supérieure à la longueur de la génératrice de la surface conique.
- Le pan incliné peut se présenter sous la forme d'une facette biseautée qui est plane.
- Lorsqu'il se présente sous la forme d'une facette biseautée plane, le pan incliné fait préférentiellement un angle compris entre 5° et 15° avec l'axe géométrique de la tige.
- Dans une variante de réalisation, le pan incliné se présente sous la forme d'une surface concave, la concavité de cette surface étant orientée selon l'axe géométrique de la tige.
- Dans une autre variante de réalisation, le pan incliné se présente sous la forme d'une surface concave ou convexe, la concavité ou la convexité de cette surface étant orientée perpendiculairement à l'axe géométrique de la tige et perpendiculairement au plan sagittal de la flèche.
- D'après l'invention, le pan incliné présente un profil en voute conique, ou une rainure rectiligne ou une nervure rectiligne située dans le plan sagittal de la flèche.
- Avantageusement, cette rainure a une largeur comprise entre 0,5 mm et 3 mm et une profondeur maximale comprise entre 2 mm et 5 mm.
- Avantageusement, cette nervure a une largeur comprise entre 0,5 mm et 3 mm et une hauteur maximale comprise entre 2 mm et 5 mm.
- La pointe peut être une pointe amovible qui est rapportée sur l'extrémité avant de la tige.
- Préférentiellement, l'extrémité pointue est située au dessus de l'axe géométrique de la tige.

Un autre aspect de l'invention définie par la revendication 15 concerne une pointe de pénétration pour flèche d'arme de pêche sous-marine, ladite pointe ayant un profil se terminant par une extrémité pointue, le profil de ladite pointe est formé par une paroi extérieure en pente qui converge vers ladite extrémité pointue, laquelle paroi extérieure est constituée d'une face supérieure présentant une pente, laquelle face supérieure est située au dessus de ladite extrémité pointue et d'une face inférieure située en dessous de ladite extrémité pointue, ladite face inférieure présentant un pan incliné qui converge vers l'extrémité pointue. Cette pointe est remarquable en ce qu'elle a un profil dissymétrique tel que, dans son plan sagittal, le pan incliné présente une pente qui est davantage allongée vers l'arrière de ladite pointe que la pente de la face supérieure.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 précitée illustre de manière schématique la trajectoire d'une flèche connue de l'art antérieur,
- la figure 2 illustre de manière schématique la trajectoire d'une flèche conforme à l'invention,
- la figure 3a est une vue de profil d'une flèche conforme à l'invention, selon un premier mode de réalisation,
- la figure 3b est une vue de dessus de la flèche de la figure 3a,
- la figure 3c est une vue de dessous de la flèche de la figure 3a,
- la figure 3d est une vue en coupe selon A-A de la flèche de la figure 3b, et montre plus particulièrement une coupe dans le plan sagittal de ladite flèche,
- la figure 3e est une vue en coupe selon B-B de la flèche de la figure 3d,
- la figure 4 est une vue agrandie de la pointe de la flèche illustrée sur les figures 3a à 3e,
- la figure 5 est une vue de face de la pointe de la figure 4,
- la figure 6 illustre les forces de portance qui s'applique sur la pointe de la figure 4,
- la figure 7a est une vue de profil d'une flèche conforme à l'invention, selon un second mode de réalisation,
- la figure 7b est une vue de dessus de la flèche de la figure 7a,
- la figure 7c est une vue de dessous de la flèche de la figure 7a,
- la figure 7d est une vue en coupe selon A-A de la flèche de la figure 7b, et montre plus particulièrement une coupe dans le plan sagittal de ladite flèche,
- la figure 7e est une vue en coupe selon B-B de la flèche de la figure 7d,
- la figure 8a est une vue de profil d'une flèche conforme à l'invention, selon un troisième mode de réalisation,
- la figure 8b est une vue de dessus de la flèche de la figure 8a,
- la figure 8c est une vue de dessous de la flèche de la figure 8a,
- la figure 8d est une vue en coupe selon A-A de la flèche de la figure 8b, et montre plus particulièrement une coupe dans le plan sagittal de ladite flèche,
- la figure 8e est une vue en coupe selon B-B de la flèche de la figure 8d,
- la figure 9 est une vue de profil d'une flèche non couverte par l'invention, selon un quatrième mode de réalisation,
- la figure 10 est une vue de profil d'une flèche non couverte par l'invention, selon un cinquième mode de réalisation,
- la figure 11a est une vue de profil d'une flèche conforme à l'invention, selon un sixième mode de réalisation,
- la figure 11b est une vue en coupe selon B-B de la flèche de la figure 11a,
- la figure 12 est une vue de profil d'une flèche non couverte par l'invention, selon un septième mode de réalisation,
- la figure 13 est une vue de profil d'une flèche non couverte par l'invention, selon un huitième mode de réalisation ;
- la figure 14 est une vue de profil d'une flèche non couverte par l'invention, selon un neuvième mode de réalisation ;
- la figure 15 est une vue de profil d'une flèche non couverte par l'invention, selon un dixième mode de réalisation ;
- la figure 16 est une vue de profil d'une flèche non couverte par l'invention, selon un dixième mode de réalisation,
- la figure 17 est une vue de profil d'une flèche non couverte par l'invention, selon un onzième mode de réalisation.

### Modes préférés de réalisation de l'invention.

La flèche objet de l'invention est adaptée pour être utilisée avec une arbalète et/ou un fusil et/ou un pistolet et/ou une fouëne, de pêche sous-marine. L'arbalète est par exemple à sandows et le fusil et le pistolet à air comprimé.

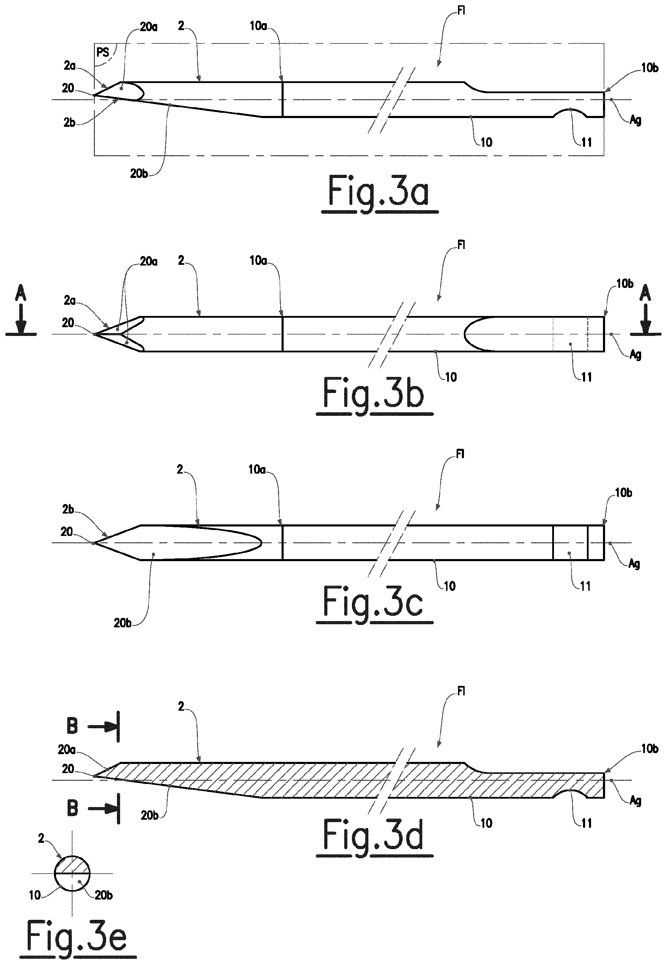

Les figures 3a à 3e illustrent un premier mode de réalisation d'une flèche exemplaire. La flèche Fl comporte une tige 10 (ou fût, ou hampe) longitudinale rectiligne du type connu de l'art antérieur. Cette tige 10 présente un axe géométrique référencé Ag. Sur les figures annexées, la tige 10 est cylindrique. À titre d'exemple, sa longueur varie de 20 cm à 2 m, et son diamètre est compris entre 2 mm et 10 mm. Elle peut être réalisée en alliage léger présentant une faible densité (exemple : alliage d'aluminium), en acier inoxydable, en matériau composite, en fibre de carbone, en plastique, en bois, ou en tout autre matériau convenant à l'homme du métier. En pratique, on utilise un matériau présentant des propriétés de rigidité et de solidité permettant de réduire la flexion de la tige 10 susceptible de se produire lorsque la flèche Fl est soumise aux forces d'accélération du fusil Fu et permettant aussi de résister aux forces d'impact sur la cible C sans la casser ou la déformer de manière permanente. Sa section peut être tubulaire sur tout ou partie de sa longueur.

La tige 10 présente une extrémité avant 10a et une extrémité arrière 10b. C'est extrémité arrière 10b est pourvue d'un cran de retenue 11, encoche, ou talon spécifique permettant d'engager la flèche Fl sur le dispositif de déclenchement de l'arbalète ou du fusil.

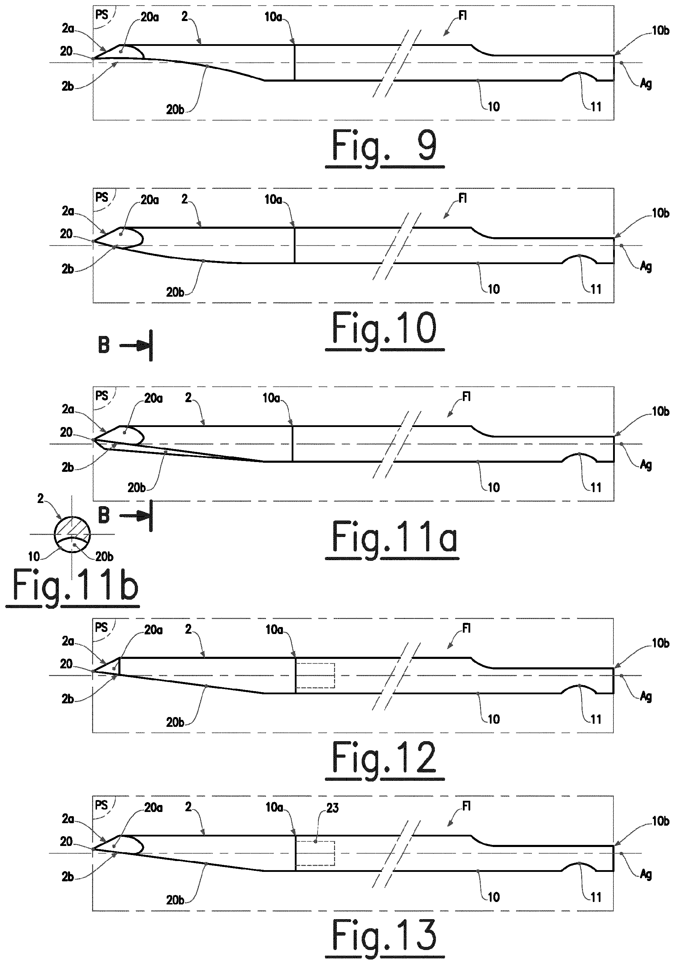

Une pointe de pénétration 2 est installée à l'extrémité avant 10a de la tige 10. Elle peut être réalisée en acier inoxydable, en céramique, en matériau composite, en fibre de carbone, en plastique, ou en tout autre matériau rigide convenant à l'homme du métier. Cette pointe 2 peut faire partie intégrante de la tige 10 et être usinée dans la même pièce. La pointe 2 peut toutefois être amovible et/ou rapportée sur l'extrémité avant 10a et ne pas avoir le même diamètre, ou la même épaisseur, que la tige 10. En particulier, la pointe 2 peut venir se visser, se clipper, être collée ou être soudée sur l'extrémité avant 10a. A cet effet, et comme cela apparait sur la figure 13, la face arrière de la pointe 2 peut comporter un élément mâle 23 s'insérant dans un élément femelle complémentaire agencée au niveau de l'extrémité avant 10a. Ces éléments mâle et femelle sont alors préférentiellement pourvus de moyen de maintien en position du type connu de l'Homme du métier. La pointe 2 peut également être une pointe détachable qui se détache de la tige 10 lorsqu'elle atteint la cible, et qui est rattachée à ladite tige par un lien souple et résistant. Une pointe 2 rapportée présente l'avantage de pouvoir être réalisée dans un autre matériau que celui de la tige 10. La pointe 2 peut notamment être réalisée dans un matériau plus résistant et/ou présentant une dureté différente de la tige 10, et subir un traitement thermique spécifique tel qu'une trempe. La pointe 2 peut en outre être obtenue par un autre procédé de fabrication, par moulage par exemple.

La pointe 2 se termine par une extrémité pointue 20. Le profil de la pointe 2 est formé par une paroi extérieure en pente qui converge vers cette extrémité pointue 20. Cette paroi extérieure constitue la surface portante de la pointe 2. Cette dernière peut être pleine ou creuse, auquel cas sa paroi intérieure peut avoir un profil identique ou différent de celui de la paroi extérieure.

Comme cela apparaît sur la figure 3a, la paroi extérieure de la pointe 2 est constituée : d'une face supérieure 2a qui est située au dessus de l'extrémité pointue 20 et d'une face inférieure 2b qui située en dessous de ladite extrémité pointue.

D'un point de vue hydrodynamique, la face supérieure 2a s'apparente à un extrados, et la face inférieure 2b s'apparente à un intrados.

Pour simplifier la conception de la pointe 2, l'extrados 2a peut être formé par de plusieurs facettes biseautées 20a à bords jointifs qui s'étendent selon l'axe géométrique Ag et qui convergent vers l'extrémité pointue 20. Sur les figures 3, 3b 4, 5 et 6, l'extrados 2a est formé par deux facettes biseautées 20a identiques. Ces facettes 20a sont planes et disposées symétriquement par rapport au plan sagittal PS de la flèche Fl. Ce plan sagital PS est un plan vertical qui passe par l'axe géométrique Ag et qui, sur les figures annexées, divise la flèche Fl en deux parties symétriques. Ce plan sagittal PS est également celui de la pointe 2, divisant cette dernière en deux parties symétriques.

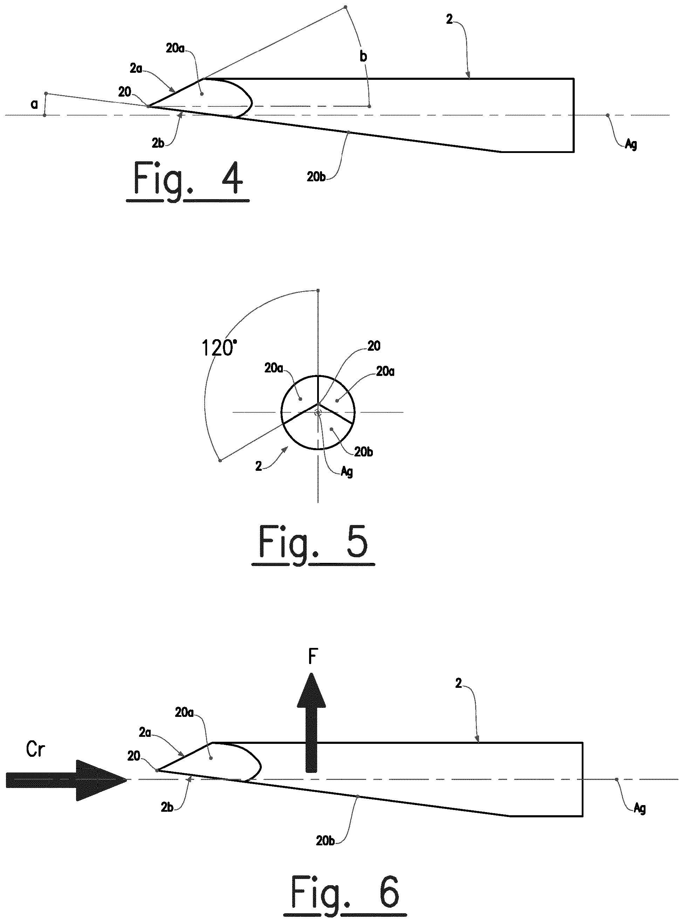

La longueur des facettes 20a est par exemple comprise entre 3 mm et 12 mm. Elles sont obtenues par moulage, fraisage, meulage, estampage, ou matriçage, de la face supérieure 2a. L'angle 'b' que les facettes 20a forment avec l'axe géométrique Ag (figure 4) est par exemple compris entre 5° et 45°, préférentiellement compris entre 35° et 45°.

L'intrados 2b présente un pan incliné 20b qui s'étend selon le plan sagittal PS de la flèche Fl et qui converge vers l'extrémité pointue 20. Le pan incliné 20b est symétrique par rapport au plan sagittal PS.

Dans le plan sagittal PS (figure 3b), la pointe 2 a un profil dissymétrique tel que le pan incliné 20b présente une pente qui est davantage allongée vers l'extrémité arrière 10b de la flèche Fl que la pente de la face supérieure 2a. Le bord de fuite (ou partie la plus en arrière) de l'intrados 2b est ainsi plus éloigné de l'extrémité pointue 20 que le bord de fuite de l'extrados 2a. La pente de l'intrados 2b est en outre plus longue que la pente de l'extrados 2a.

Pour conserver, voire amplifier, l'effet pénétrant de la pointe 2, l'extrémité pointue 20 est avantageusement située au dessus de l'axe géométrique Ag de la tige 10. La demanderesse a également pu constater que la pointe 2 pénètre plus facilement dans les cibles, comme une aiguille de seringue.

Préférentiellement, la surface du pan incliné 20b est supérieure à la surface de la face supérieure 2a. En d'autres termes, la surface de l'intrados 2b est supérieure à la surface de l'extrados 2a.

Dans le mode de réalisation illustré sur les figures 3a à 3e, le pan incliné 20b se présente sous la forme d'une facette biseautée qui est plane. Cette facette biseautée 20b converge vers l'extrémité pointue 20. La longueur de la facette 20b est supérieure à la longueur des facettes biseautées 20a de l'extrados 2a. La longueur de la facette 20b est par exemple comprise entre 10 mm et 30 mm. Elle est obtenue par moulage, fraisage, meulage, estampage ou matriçage de la face inférieure 2b. Comme cela apparait sur la figure 5, les deux facettes 20a et la facette biseautée 20b sont disposées à 120° autour de l'axe géométrique Ag, formant un trièdre dont le sommet coïncide avec l'extrémité pointue 20.

L'angle 'a' que la facette 20b forme avec l'axe géométrique Ag (figure 4) est par exemple compris entre 5° et 45°, préférentiellement compris entre 5° et 15°.

Sur la figure 4, les angles 'a' et 'b' sont différents. Plus particulièrement, l'angle 'a' est inférieur à l'angle 'b'. Cela se traduit par le fait que la facette 20b est plus longue que les facettes 20a. Il est a noter que les angles 'a' et 'b' peuvent être identiques. Dans ce cas, pour que la facette 20b soit plus longue que les facettes 20a, il convient de décaler vers le haut l'extrémité pointue 20 de l'axe géométrique Ag.

La figure 6 illustre la force de portance F qui s'applique sur la pointe 2 lorsque la flèche Fl est propulsée dans l'eau. L'écoulement relatif Cr de l'eau autour de la pointe 2 induit une force hydrodynamique qui s'exerce perpendiculairement à la direction du mouvement. Cette force hydrodynamique s'applique sur l'extrados 2a et sur l'intrados 2b. Les filets d'eau s'écoulant le long de la pointe 2 n'ont pas la même vitesse au niveau de l'extrados 2a que de l'intrados 2b. En effet, les filets d'eau parcourant l'extrados 2a vont plus vite que ceux parcourant l'intrados 2b du fait de la plus grande longueur de ce dernier. Cette variation de vitesse provoque une variation de pression : la pression sur l'extrados 2a est plus faible que la pression sur l'intrados 2b. Cette différence de pression est à l'origine de la portance F qui est dirigée vers le haut : la flèche Fl est attirée vers le haut.

La figure 2 illustre schématiquement cette nouvelle trajectoire. La trajectoire T de la flèche Fl reste parabolique. Toutefois, la flèche Fl ayant naturellement tendance à monter vers le haut, le tireur peut limiter le décalage angulaire de l'axe de tir AT, vers le haut de la ligne de visée LV. En comparaison avec la figure 1, ce nouveau décalage angulaire Ω2 est tel que Ω2 < Ω1. En faisant pratiquement coïncider l'axe de tir AT avec la ligne de visée LV, la flèche Fl va naturellement monter vers le haut, suivre une courbe parabolique, et redescendre pour atteindre la cible C. En outre, lorsque la vitesse de la flèche Fl diminue, la portance positive induite par la pointe 2, a pour effet de compenser, au moins temporairement, le poids de ladite flèche, de sorte que cette dernière ne pique pas du nez mais plane dans l'eau. La trajectoire parabolique T est alors plus plate que celle obtenue avec une flèche à pointe symétrique (figure 1). Le tir est ainsi plus tendu, permettant au tireur de placer son fusil quasiment dans sa ligne de visée LV, ce qui est une position de tir plus naturelle.

La demanderesse a réalisé le test décrit ci-après. Dans un premier temps, elle a armé le fusil Fu avec une flèche Fl' à pointe conique de l'art antérieur. Elle s'est placée à 3 m d'une cible C fixe et a fait coïncider l'axe de tir AT avec la ligne de visée LV. La flèche Fl' a atteint la cible C au niveau d'un point d'impact situé 10 cm en dessous du centre de ladite cible (lequel centre coïncide avec la ligne de visée LV). Dans un second temps, elle a armé le même fusil Fu avec une flèche Fl ayant une pointe dissymétrique conforme à l'invention. Dans les mêmes conditions, elle s'est placée à 3 m de la cible C en faisant coïncider l'axe de tir AT avec la ligne de visée LV. La flèche Fl a atteint la cible C au niveau d'un point d'impact situé juste à 4 cm en dessous du centre de ladite cible. Cela démontre la meilleure précision de tir susceptible d'être obtenue avec une flèche conforme à l'invention.

Sur la figure 9, le pan incliné 20b se présente sous la forme d'une surface concave. La concavité de cette surface est orientée perpendiculairement à l'axe géométrique Ag et perpendiculairement au plan sagittal PS. Cette surface concave peut être obtenue par moulage ou fraisage de la face inférieure 2b. Sa longueur est supérieure à la longueur des facettes biseautées 20a. Les deux facettes 20a et cette surface concave sont disposées à 120° autour de l'axe géométrique Ag.

Sur la figure 10, le pan incliné 20b se présente sous la forme d'une surface convexe. La convexité de cette surface est orientée perpendiculairement à l'axe géométrique Ag et perpendiculairement au plan sagittal PS. Cette surface convexe peut être une surface obtenue par moulage ou fraisage ou meulage de la face inférieure 2b. Sa longueur est supérieure à la longueur des facettes biseautées 20a. Les deux facettes 20a et cette surface convexe sont disposées à 120° autour de l'axe géométrique Ag.

Sur les figures 11a et 11b, le pan incliné 20b se présente sous la forme d'une surface concave, avec une concavité orientée selon l'axe géométrique Ag. La génératrice de cette surface conique passe par l'extrémité pointue 20 et décrit une portion de courbe circulaire concave qui est située dans un plan perpendiculaire au plan sagittal PS et perpendiculaire à l'axe géométrique Ag. Le pan incliné 20b forme ainsi une voute conique sous l'extrados 2a. Cette surface concave peut être obtenue par moulage ou fraisage de la face inférieure 2b. La longueur de sa génératrice est supérieure à la longueur des facettes biseautées 20a. Les deux facettes 20a et cette surface concave sont disposées à 120° autour de l'axe géométrique Ag.

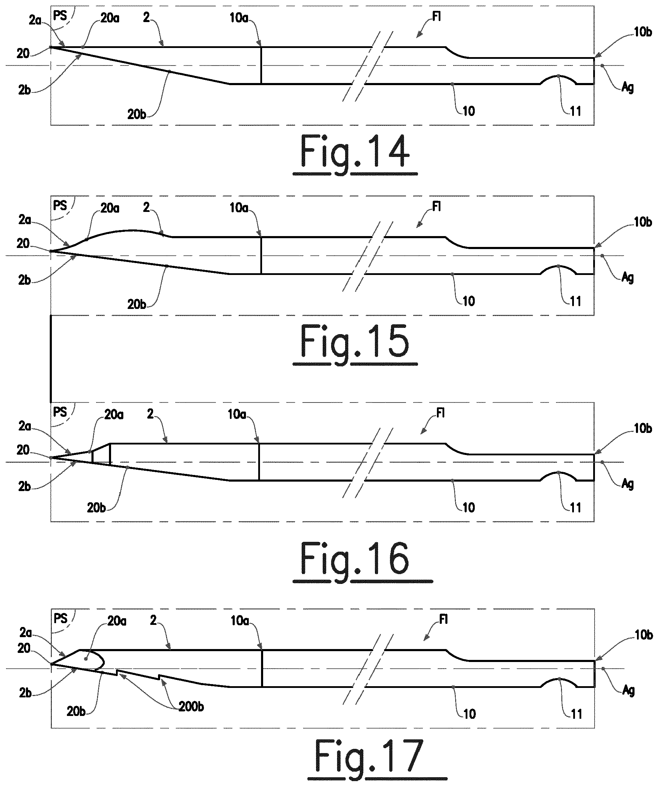

Sur la figure 17, le pan incliné 20b présente un ou plusieurs redans 200b formant un angle saillant avec ledit pan incliné. Lorsque la flèche FI est propulsée dans l'eau, ce ou ces redans 200b génèrent un effet de cavitation qui limite les forces de frottements.

Sur la figure 12, l'extrados 2a est formé par une surface conique 20a qui s'étend selon l'axe géométrique Ag de la tige 10 et qui converge vers l'extrémité pointue 20. La génératrice de la surface conique 20a passe par l'extrémité pointue 20 et décrit une portion de courbe circulaire correspondant à la périphérie de la tige 10, cette portion de courbe étant délimitée par l'intrados 2b. La longueur de la génératrice de la surface conique 20a est par exemple comprise entre 3 mm et 5 mm. L'angle que forme cette génératrice avec l'axe géométrique Ag est par exemple compris entre 5° et 45°, préférentiellement compris entre 35° et 45°. Quelle que soit la configuration du pan incliné 20b, qu'il soit plan, concave, convexe, en voute, sa longueur reste supérieure à la longueur de la génératrice de la surface conique 20a. Cette dernière peut être obtenue par moulage, fraisage ou meulage de la face supérieure 2a. Il est a noté que cette forme conique de l'extrados 2a convient à toutes les formes précitées de l'intrados 2a (plan, concave, convexe, en voute, ...).

Sur la figure 14, l'extrados 2a présente une pente nulle, et se situe dans le même plan - ou au même niveau - que l'extrémité pointue 20. Sur la figure 15, l'extrados 2a a une forme en ogive. Sur la figure 16, l'extrados 2a est formé par plusieurs surfaces coniques ayant des chacune des pentes distinctes.

Pour simplifier la fabrication de la pointe 2, il peut être avantageux d'utiliser des pointes connues de l'art antérieur, c'est-à-dire des pointes coniques, à facettes, en ogive, ou autre, qui sont symétrique par rapport à l'axe géométrique de la tige sur laquelle elles sont montées. Cette pointe est matricée ou taillée, par exemple par fraisage, pour conformer le plan incliné 20b.

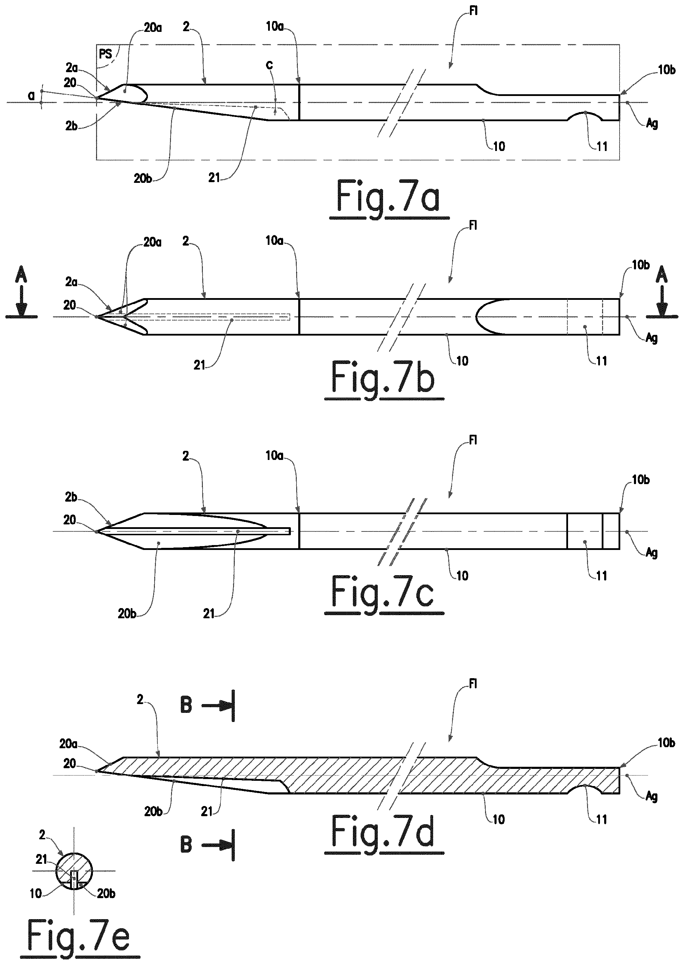

Sur les figures 7a à 7e, le pan incliné 20b présente une rainure rectiligne 21 située dans le plan sagittal Ps. Cette rainure 21 peut par exemple être obtenue par moulage, usinage, estampage ou matriçage. Avantageusement, sa largeur est comprise entre 0,5 mm et 3 mm et sa profondeur maximale comprise entre 2 mm et 5 mm. L'angle 'c' que la rainure 21 forme avec l'axe géométrique Ag est préférentiellement différent de l'angle 'a' que forme le plan incliné 20a avec ledit axe. Cet angle 'c' peut être compris entre 0° et 45°. L'extrémité arrière de la rainure 21 se termine par une portion courbe en arc de cercle dont le rayon de courbure correspond par exemple à celui de l'outil de taille lorsque ladite rainure est réalisée par usinage. La rainure 21 étant orientée dans le sens d'écoulement relatif de l'eau, elle fait office de dérive longitudinal. Elle améliore la rectitude de la trajectoire de la flèche Fl, en permettant de limiter des dérapages latéraux, par exemple dus à l'effet du courant. En outre, la demanderesse a pu constater de manière surprenante que la flèche Fl avait davantage tendance à se diriger vers le haut lorsque l'angle que la rainure 21 forme avec l'axe géométrique Ag était plus grand que l'angle 'a'. Notamment, la portion courbe formant l'extrémité arrière de la rainure 21 permet de diriger le flux d'eau vers le bas, permettant d'augmenter l'effet de portance positive susmentionné.

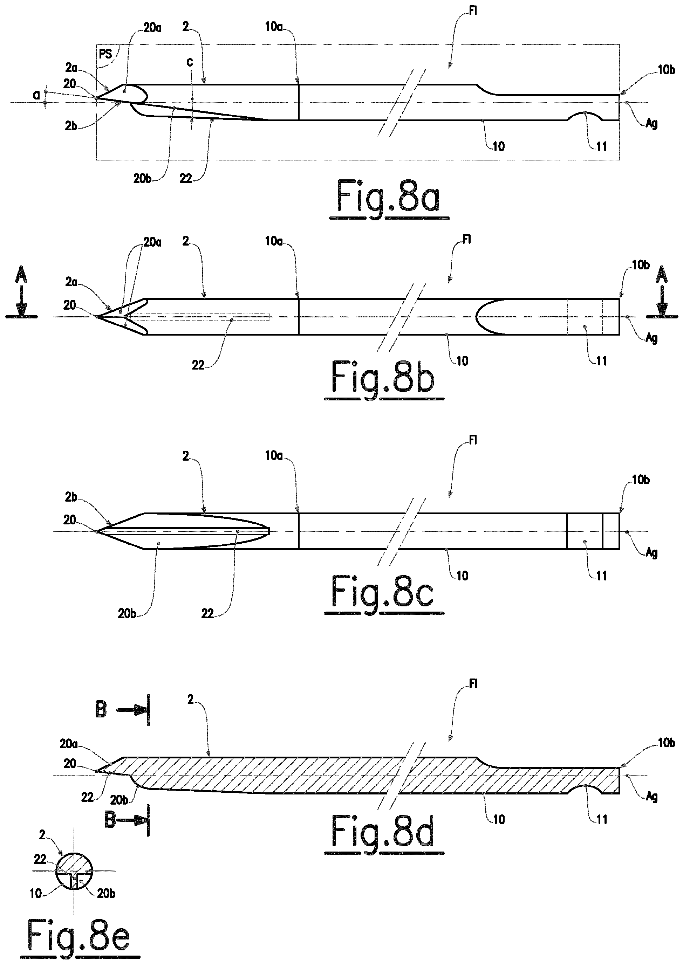

En se rapportant aux figures 8a à 8e, le même avantage technique est obtenu en remplaçant la rainure 21 par une nervure 22. Cette dernière est rectiligne et située dans le plan sagittal PS. Elle a préférentiellement une largeur comprise entre 0,5 mm et 3 mm et une hauteur maximale comprise entre 2 mm et 5 mm. L'angle 'c' que la nervure 22 forme avec l'axe géométrique Ag est préférentiellement différent de l'angle 'a'. Cet angle peut être compris entre 0° et 45°. Un angle 'c' supérieur à l'angle 'a' améliore la montée vers le haut de la flèche Fl. La nervure 22 peut être directement usinée dans la pointe 2, ou être rapportée et soudée, collée ou emmanchée forcée. Une nervure 22 rapportée présente l'avantage de pouvoir être réalisée dans un autre matériau que celui de la pointe 2.

Egalement, un plan incliné 20b ayant un profil en voute conique tel qu'illustré sur les figures 11a et 11b, forme un canal directif qui permet d'obtenir l'effet de dérive susmentionné.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de la portée de l'invention définie par les revendications attachées. En particulier :
- Les pointes 2 objets de l'invention peuvent équipées une flèche trident ou multi dent. Dans ce cas, trois pointes 2 ou plus peuvent être installées à l'extrémité avant 10a de la tige 10.
- Le diamètre de la pointe 2 peut être différent de celui de la tige 2. Il peut notamment être égal, supérieur ou inférieur au diamètre de ladite tige 2.
- Les facettes 20a ne sont pas nécessairement planes, mais peuvent présenter une certaine concavité ou une certaine convexité.
- Le nombre de facettes 20a peut être supérieur à deux (multi-facettes).
- Le pan incliné 20b peut se présenter sous la forme d'une surface conique qui s'étend selon l'axe géométrique Ag de la tige 10 et qui converge vers l'extrémité pointue 20.
- L'extrémité pointue 20 peut coïncider avec l'axe géométrique Ag de la tige 10.
- Les facettes 20a et le pan incliné 20b ne sont pas nécessairement disposés à 120° autour de l'axe géométrique Ag. Par exemple, le pan incliné 20b peut couvrir un arc de 180° est les facettes 20a un arc de 90° chacune. De manière plus générale, l'intrados 2b peut couvrir un arc angulaire plus important que celui couvert par l'extrados 2a.
- L'extrados 2a peut être en forme d'ogive.
- Après avoir usiné le pan incliné 20b, ce dernier peut subir un traitement thermique tel qu'une trempe pour renforcer sa rigidité.
- L'angle 'c' que la rainure 21 ou la nervure 22 forme avec l'axe géométrique Ag peut être égal à l'angle 'a' que forme le plan incliné 20a avec ledit axe.
- La forme de la rainure 21 peut être constituée par une seule portion courbe en arc de cercle.
- L'extrémité pointe 20 peut être située en dessous de l'axe géométrique Ag.

## Revendications

1. Flèche pour arme de pêche sous-marine, comportant une tige (10) longitudinale rectiligne présentant un axe géométrique (Ag) et à l'extrémité avant (10a) de laquelle est installée au moins une pointe de pénétration (2) qui se termine par une extrémité pointue (20), le profil de la pointe (2) étant formé par une paroi extérieure en pente qui converge vers l'extrémité pointue, laquelle paroi extérieure est constituée d'une face supérieure (2a) présentant une pente, laquelle face supérieure (2a) est située au dessus de l'extrémité pointue (20) et d'une face inférieure (2b) située en dessous de ladite extrémité pointue, ladite face inférieure (2b) présentant un pan incliné (20b) qui s'étend selon le plan sagittal (PS) de la flèche (Fl) et qui converge vers l'extrémité pointue (20), et telle que dans le plan sagittal (PS) de la flèche (Fl), la pointe (2) a un profil dissymétrique tel que le pan incliné (20b) présente une pente qui est davantage allongée vers l'extrémité arrière (10b) de la flèche (Fl) que la pente de la face supérieure (2a), **se caractérisant par le fait que** le pan incliné (20b) présente :
- un profil en voute conique,
- ou une rainure rectiligne (21), ou une nervure rectiligne (22), située dans le plan sagittal (PS) de la flèche (Fl),
lequel profil en voute conique, laquelle rainure ou laquelle nervure fait office de dérive longitudinale.

2. Flèche selon la revendication 1 suivant l'option selon laquelle le pan incliné (20b) présente une rainure rectiligne (21), dans laquelle la rainure (21) forme un angle (c) avec l'axe géométrique (Ag) de la tige (10), cet angle étant différent de l'angle (a) que forme le plan incliné (20b) avec ledit axe.

3. Flèche selon la revendication 2, dans laquelle l'angle (c) que la rainure (21) forme avec l'axe géométrique (Ag) de la tige (10) est plus grand que l'angle (a) que forme le plan incliné (20b) avec ledit axe.

4. Flèche selon l'une des revendications précédentes suivant l'option selon laquelle le pan incliné (20b) présente une rainure rectiligne (21), dans laquelle la rainure (21) présente une extrémité arrière qui se termine par une portion courbe.

5. Flèche selon la revendication 1 suivant l'option selon laquelle le pan incliné (20b) présente une nervure rectiligne (22), dans laquelle la nervure (22) forme un angle (c) avec l'axe géométrique (Ag) de la tige (10), cet angle étant différent de l'angle (a) que forme le plan incliné (20b) avec ledit axe.

6. Flèche selon la revendication 5, dans laquelle l'angle (c) que la nervure (22) forme avec l'axe géométrique (Ag) de la tige (10) est supérieur à l'angle (a) que forme le plan incliné (20b) avec ledit axe.

7. Flèche selon l'une des revendications précédentes, dans laquelle :
- la face supérieure (2a) de la paroi extérieure de la pointe (2), est formée par des facettes (20a) biseautées à bords jointifs qui s'étendent selon l'axe géométrique (Ag) de la tige (10) et qui convergent vers l'extrémité pointue (20),
- la longueur du pan incliné (20b) est supérieure à la longueur des facettes biseautées (20a).

8. Flèche selon la revendication 7, dans laquelle la face supérieure (2a) de la paroi extérieure de la pointe (2), est formée par deux facettes biseautées (20a), ces deux facettes (20a) et le pan incliné (20b) étant disposés à 120° autour de l'axe géométrique (Ag) de la tige (10).

9. Flèche selon l'une des revendications précédentes, dans laquelle :
- la face supérieure (2a) de la paroi extérieure de la pointe (2), est formée par une surface conique (20'a) qui s'étend selon l'axe géométrique (Ag) de la tige (10) et qui converge vers l'extrémité pointue (20),
- la longueur du pan incliné (20b) est supérieure à la longueur de la génératrice de la surface conique (20'a).

10. Flèche selon l'une des revendications 1 à 9, dans laquelle le pan incliné (20b) se présente sous la forme d'une facette biseautée qui est plane, lequel pan fait un angle compris entre 5° et 15° avec l'axe géométrique (Ag) de la tige (10).

11. Flèche selon l'une des revendications 1 à 9, dans laquelle le pan incliné (20b) se présente sous la forme d'une surface concave, la concavité de cette surface étant orientée selon l'axe géométrique (Ag) de la tige (10).

12. Flèche selon l'une des revendications 1 à 9, dans laquelle lorsque le pan incliné (20b) présente une rainure rectiligne (21) ou une nervure rectiligne (22), ledit pan se présente sous la forme d'une surface concave ou convexe, la concavité ou la convexité de cette surface étant orientée perpendiculairement à l'axe géométrique (Ag) de la tige (10) et perpendiculairement au plan sagittal (PS) de la flèche (Fl).

13. Flèche selon l'une des revendications précédentes, dans laquelle : la rainure (21) a une largeur comprise entre 0,5 mm et 3 mm et une profondeur maximale comprise entre 2 mm et 5 mm ; ou la nervure (22) a une largeur comprise entre 0,5 mm et 3 mm et une hauteur maximale comprise entre 2 mm et 5 mm.

14. Flèche selon l'une des revendications 1 à 13, dans laquelle la pointe (2) est une pointe amovible qui est rapportée sur l'extrémité avant (10a) de la tige (10).

15. Pointe de pénétration pour flèche (Fl) d'arme de pêche sous-marine, ladite pointe ayant un profil se terminant par une extrémité pointue (20), le profil de ladite pointe étant formé par une paroi extérieure en pente qui converge vers ladite extrémité pointue, laquelle paroi extérieure est constituée d'une face supérieure (2a) présentant une pente, laquelle face supérieure (2a) est située au dessus de ladite extrémité pointue et d'une face inférieure (2b) située en dessous de ladite extrémité pointue, ladite face inférieure présentant un pan incliné (20b) qui converge vers l'extrémité pointue (20), ladite pointe (2) ayant un profil dissymétrique tel que, dans son plan sagittal (PS), le pan incliné (2b) présente une pente qui est davantage allongée vers l'arrière de ladite pointe que la pente de la face supérieure (2a), **se caractérisant par le fait que** le pan incliné (20b) présente :
- un profil en voute conique,
- ou une rainure rectiligne (21), ou une nervure rectiligne (22), située dans le plan sagittal (PS) de la flèche (Fl),
lequel profil en voute conique, laquelle rainure ou laquelle nervure fait office de dérive longitudinal.

## Patentansprüche

1. Pfeil für eine Waffe zum Unterwasserfischen, der einen länglichen geradlinigen Schaft (10) aufweist, der eine geometrische Achse (Ag) hat und an dessen vorderen Ende (10a) mindestens eine Eindringspitze (2) angeordnet ist, die in einem spitzen Ende (20) endet, wobei das Profil der Spitze (2) von einer schrägen Außenwand geformt wird, die zum spitzen Ende hin konvergiert, wobei diese Außenwand aus einer Oberseite (2a), die eine Schräge aufweist, wobei die Oberseite (2a) sich über dem spitzen Ende (20) befindet, und aus einer Unterseite (2b) besteht, die sich unter dem spitzen Ende befindet, wobei die Unterseite (2b) eine geneigte Fläche (20b) aufweist, die sich gemäß der Sagittalebene (PS) des Pfeils (FI) erstreckt und zum spitzen Ende (20) hin konvergiert,
und derart, dass die Spitze (2) in der Sagittalebene (PS) des Pfeils (FI) ein unsymmetrisches Profil hat, derart, dass die geneigte Fläche (20b) eine Schräge aufweist, die weiter zum hinteren Ende (10b) des Pfeils (FI) verlängert ist als die Schräge der Oberseite (2a), **dadurch gekennzeichnet, dass** die geneigte Fläche (20b) aufweist:
- ein Kegelgewölbe-Profil,
- oder eine geradlinige Rille (21), oder eine geradlinige Rippe (22), die sich in der Sagittalebene (PS) des Pfeils (FI) befindet,
wobei das Kegelgewölbe-Profil, die Rille oder die Rippe als Längsdrift dient.

2. Pfeil nach Anspruch 1 entsprechend der Option, gemäß der die geneigte Fläche (20b) eine geradlinige Rille (21) aufweist, wobei die Rille (21) einen Winkel (c) mit der geometrischen Achse (Ag) des Schafts (10) bildet, wobei dieser Winkel sich von dem Winkel (a) unterscheidet, den die geneigte Ebene (20b) mit der Achse bildet.

3. Pfeil nach Anspruch 2, wobei der Winkel (c), den die Rille (21) mit der geometrischen Achse (Ag) des Schafts (10) bildet, größer ist als der Winkel (a), den die geneigte Ebene (20b) mit der Achse bildet.

4. Pfeil nach einem der vorhergehenden Ansprüche entsprechend der Option, gemäß der die geneigte Fläche (20b) eine geradlinige Rille (21) aufweist, wobei die Rille (21) ein hinteres Ende aufweist, das in einem gekrümmten Abschnitt endet.

5. Pfeil nach Anspruch 1 entsprechend der Option, gemäß der die geneigte Fläche (20b) eine geradlinige Rippe (22) aufweist, wobei die Rippe (22) einen Winkel (c) mit der geometrischen Achse (Ag) des Schafts (10) bildet, wobei dieser Winkel sich von dem Winkel (a) unterscheidet, den die geneigte Ebene (20b) mit der Achse bildet.

6. Pfeil nach Anspruch 5, wobei der Winkel (c), den die Rippe (22) mit der geometrischen Achse (Ag) des Schafts (10) bildet, größer ist als der Winkel (a), den die geneigte Ebene (20b) mit der Achse bildet.

7. Pfeil nach einem der vorhergehenden Ansprüche, wobei:
- die Oberseite (2a) der Außenwand der Spitze (2) von abgeschrägten Facetten (20a) mit aneinandergrenzenden Rändern gebildet wird, die sich gemäß der geometrischen Achse (Ag) des Schafts (10) erstrecken und zum spitzen Ende (20) hin konvergieren,
- die Länge der geneigten Fläche (20b) größer ist als die Länge der abgeschrägten Facetten (20a).

8. Pfeil nach Anspruch 7, wobei die Oberseite (2a) der Außenwand der Spitze (2) von zwei abgeschrägten Facetten (20a) gebildet wird, wobei diese zwei Facetten (20a) und die geneigte Fläche (20b) in 120° um die geometrische Achse (Ag) des Schafts (10) angeordnet sind.

9. Pfeil nach einem der vorhergehenden Ansprüche, wobei:
- die Oberseite (2a) der Außenwand der Spitze (2) von einer konischen Fläche (20'a) gebildet wird, die sich entlang der geometrischen Achse (Ag) des Schafts (10) erstreckt und zum spitzen Ende (20) hin konvergiert,
- die Länge der geneigten Fläche (20b) größer ist als die Länge der Mantellinie der konischen Fläche (20'a).

10. Pfeil nach einem der Ansprüche 1 bis 9, wobei die geneigte Ebene (20b) in Form einer abgeschrägten Facette vorliegt, die eben ist, wobei die Ebene einen Winkel zwischen 5° und 15° mit der geometrischen Achse (Ag) des Schafts (10) bildet.

11. Pfeil nach einem der Ansprüche 1 bis 9, wobei die geneigte Ebene (20b) in Form einer konkaven Fläche vorliegt, wobei die Konkavität dieser Fläche gemäß der geometrischen Achse (Ag) des Schafts (10) ausgerichtet ist.

12. Pfeil nach einem der Ansprüche 1 bis 9, wobei, wenn die geneigte Fläche (20b) eine geradlinige Rille (21) oder eine geradlinige Rippe (22) aufweist, die Ebene in Form einer konkaven oder konvexen Fläche vorliegt, wobei die Konkavität oder die Konvexität dieser Fläche lotrecht zur geometrischen Achse (Ag) des Schafts (10) und lotrecht zur Sagittalebene (PS) des Pfeils (FI) ausgerichtet ist.

13. Pfeil nach einem der vorhergehenden Ansprüche, wobei die Rille (21) eine Breite zwischen 0,5 mm und 3 mm und eine maximale Tiefe zwischen 2 mm und 5 mm hat; oder die Rippe (22) eine Breite zwischen 0,5 mm und 3 mm und eine maximale Höhe zwischen 2 mm und 5 mm hat.

14. Pfeil nach einem der Ansprüche 1 bis 13, wobei die Spitze (2) eine entfernbare Spitze ist, die auf das vordere Ende (10a) des Schafts (10) aufgesetzt wird.

15. Eindringspitze für einen Pfeil (FI) einer Waffe zum Unterwasserfischen, wobei die Spitze ein Profil hat, das in einem spitzen Ende (20) endet, wobei das Profil der Spitze von einer schrägen Außenwand gebildet wird, die zum spitzen Ende hin konvergiert, wobei die Außenwand aus einer eine Schräge aufweisenden Oberseite (2a), wobei die Oberseite (2a) sich über dem spitzen Ende befindet, und einer Unterseite (2b) besteht, die sich unter dem spitzen Ende befindet, wobei die Unterseite eine geneigte Fläche (20b) aufweist, die zum spitzen Ende (20) hin konvergiert,
wobei die Spitze (2) ein unsymmetrisches Profil hat, derart, dass die geneigte Fläche (2b) in ihrer Sagittalebene (PS) eine Schräge aufweist, die weiter zur Rückseite der Spitze verlängert ist als die Schräge der Oberseite (2a),
**dadurch gekennzeichnet, dass** die geneigte Fläche (20b) aufweist:
- ein Kegelgewölbe-Profil,
- oder eine geradlinige Rille (21), oder eine geradlinige Rippe (22), die sich in der Sagittalebene (PS) des Pfeils (FI) befindet,
wobei das Kegelgewölbe-Profil, die Rille oder die Rippe als Längsdrift dient.

## Claims

1. Arrow head for underwater fishing weapon, comprising a rectilinear longitudinal shaft (10) having a geometric axis (Ag) and at the front end (10a) of which at least one penetrating tip (2) terminating in a pointed end (20), is installed, the profile of the tip (2) being formed by an exterior wall with a gradient, which converges towards the pointed end, which exterior wall is formed by an upper face (2a) having a gradient, which upper face (2a) is located above the pointed end (20) and by a lower face (2b) located below said pointed end, said lower face (2b) having an inclined face (20b) that extends in the sagittal plane (PS) of the arrow head (Fl) and converges towards the pointed end (20), and such that, in the sagittal plane (PS) of the arrow head (Fl) the tip (2) has an asymmetrical profile such that the inclined face (20b) has a gradient that is further extended towards the rear end (10b) of the arrow head (Fl) than the gradient of the upper face (2a), which is **characterized in that** the inclined face (20b) has:
- a conically domed profile,
- or a rectilinear groove (21), or a rectilinear rib (22), located in the sagittal plane (PS) of the arrow head (Fl),
which conically domed profile, which groove or which rib acts as longitudinal fin.

2. Arrow head according to Claim 1, in the option whereby the inclined face (20b) has a rectilinear groove (21), in which the groove (21) forms an angle (C) with the geometric axis (Ag) of the shaft (10), this angle being different from the angle (a) formed by the inclined plane (20b) with said axis.

3. Arrow head according to Claim 2, in which the angle (C) that the groove (21) forms with the geometric axis (Ag) of the shaft (10) is greater than the angle (a) formed by the inclined plane (20b) with said axis.

4. Arrow head according to one of the preceding claims, in the option whereby the inclined face (20b) has a rectilinear groove (21), in which the groove (21) has a rear end that terminates in a curved portion.

5. Arrow head according to Claim 1, in the option whereby the inclined face (20b) has a rectilinear rib (22), in which the rib (22) forms an angle (C) with the geometric axis (Ag) of the shaft (10), this angle being different from the angle (a) formed by the inclined plane (20b) with said axis.

6. Arrow head according to Claim 5, in which the angle (C) that the rib (22) forms with the geometric axis (Ag) of the shaft (10) is greater than the angle (a) formed by the inclined plane (20b) with said axis.

7. Arrow head according to one of the preceding claims, in which:
- the upper face (2a) of the exterior wall of the tip (2) is formed by bevelled facets (20a) with contiguous edges that extend in the geometric axis (Ag) of the shaft (10) and converge towards the pointed end (20),
- the length of the inclined face (20b) is greater than the length of the bevelled facets (20a).

8. Arrow head according to Claim 7, in which the upper face (2a) of the exterior wall of the tip (2) is formed by two bevelled facets (20a), these two facets (20a) and the inclined face (20b) being arranged at 120° about the geometric axis (Ag) of the shaft (10).

9. Arrow head according to one of the preceding claims, in which:
- the upper face (2a) of the exterior wall of the tip (2) is formed by a conical surface (20'a) that extends in the geometric axis (Ag) of the shaft (10) and converges towards the pointed end (20),
- the length of the inclined face (20b) is greater than the length of the generatrix of the conical surface (20'a).

10. Arrow head according to one of Claims 1 to 9, in which the inclined face (20b) has the form of a bevelled facet that is planar, which face forms an angle of between 5° and 15° with the geometric axis (Ag) of the shaft (10).

11. Arrow head according to one of Claims 1 to 9, in which the inclined face (20b) has the form of a concave surface, the concavity of this surface being oriented in the geometric axis (Ag) of the shaft (10).

12. Arrow head according to one of Claims 1 to 9, in which, when the inclined face (20b) has a rectilinear groove (21) or a rectilinear rib (22), said face has the form of a concave or convex surface, the concavity or convexity of this surface being oriented perpendicularly to the geometric axis (Ag) of the shaft (10) and perpendicularly to the sagittal plane (PS) of the arrow head (Fl).

13. Arrow head according to one of the preceding claims, in which: the groove (21) has a width of between 0.5 mm and 3 mm and a maximum depth of between 2 mm and 5 mm; or the rib (22) has a width of between 0.5 mm and 3 mm and a maximum height of between 2 mm and 5 mm.

14. Arrow head according to one of Claims 1 to 13, in which the tip (2) is a removable tip that is added to the front end (10a) of the shaft (10).

15. Penetrating tip for an arrow head (Fl) of an underwater fishing weapon, said tip having a profile terminating in a pointed end (20), the profile of said tip being formed by an exterior wall with a gradient that converges towards said pointed end, which exterior wall is formed by an upper face (2a) having a gradient, which upper face (2a) is located above said pointed end, and a lower face (2b) located below the said pointed end, the said lower face having an inclined face (20b) that converges towards the pointed end (20), said tip (2) having an asymmetric profile such that, in the sagittal plane (PS) thereof, the inclined face (2b) has a gradient that is further extended towards the rear of said tip than the gradient of the upper face (2a), which is **characterized in that** the inclined face (20b) has:
- a conically domed profile,
- or a rectilinear groove (21), or a rectilinear rib (22), located in the sagittal plane (PS) of the arrow head (Fl),
which conically domed profile, which groove or which rib acts as longitudinal fin.
